Europäisches Patentamt

European Patent Office

Office européen des brevets

(19)

(11) Publication number: **0 122 020**
A1

# EUROPEAN PATENT APPLICATION

(12)

(21) Application number: **84301472.1**

(22) Date of filing: **06.03.84**

(51) Int. Cl.³: **B 65 G 67/24,** B 65 G 41/02

(30) Priority: **07.03.83 GB 8306251**

(43) Date of publication of application: **17.10.84**
**Bulletin 84/42**

(84) Designated Contracting States: **DE FR GB**

(71) Applicant: **HOVERTUBE (SYSTEMS) LIMITED,**
**11 Devonshire Road, Chiswick London W4 2UR (GB)**

(72) Inventor: **Field, Jeffrey Alan, 11 Burns Close, Poets**
**Estate Maldon Essex (GB)**

(74) Representative: **Jennings, Guy Kenneth et al, GILL**
**JENNINGS & EVERY 53-64 Chancery Lane, London**
**WC2A 1HN (GB)**

(54) **Conveyor.**

(57) An endless conveyor belt (25) extends between a driving drum (8) and a return drum (26) supported by a frame (5) cantilevered from a steerable chassis (15). A support trough (30) runs beneath the upper run of the belt and extendable side guards (38) for retaining loose material on the belt are hinged by torsion rods (56). The conveyor is inserted with the side guards (38) in retracted position beneath a bottom discharge hopper wagon supported by rails (20). The frame (5) is supported by rollers (54) engaging the rails (20) and after insertion, the side guards are extended. Material from the belt (25) is transferred to a second conveyor (2) which may discharge into another vehicle.

0122020

GJE/10/2090/0 2

<u>Hovertube (Systems) Limited</u>

- 1 -

<u>CONVEYOR</u>

This invention relates to conveyors, particularly those suitable for the handling of loose materials in bulk. An increasing variety of such materials are being transported by rail in bulk hopper wagons with bottom discharge. The off-loading of such materials has traditionally called for a purpose-built facility, generally a conveying system installed within a pit beneath the rails. The civil engineering work involved is usually quite elaborate and thus expensive and the fact that the resulting installation is fixed means that it lacks flexibility and any wagon to be off-loaded must be shunted around to a specific off-loading point.

The invention is based on the general idea of using a belt conveyor having a sufficiently low profile to pass through the gap between the rails and the bottom of the wagon, being supported on the rails themselves if necessary, so that the conveying apparatus can be moved around as required and there is thus no need for any fixed installation or any shunting of wagons.

According to the invention a conveyor arrangement for this purpose comprises an endless conveyor belt extending between a driving drum and a return drum supported by a frame cantilevered from a steerable chassis, and having a support beneath at least a major portion of its upper run and extendable side guards for retaining loose material on the belt.

In use the chassis is steered to introduce the frame and the associated conveyor belt, with the side guards in a retracted position, beneath the wagon to be off-loaded, with the line of the conveyor extending transversely to the track beneath the hopper opening.  The side guards are then extended, the conveyor set in motion and the hopper flaps opened to allow material to be discharged onto the conveyor and to be moved transversely away from the wagon.   The conveyor will need to be effectively horizontal, but it may co-operate with a second, inclined conveyor which may, for example, transfer the material to another vehicle.

Although a conveyor arrangement in accordance with the invention is designed primarily for use in off-loading a railway wagon,  it will be understood that it may be used with other types of hopper wagon with bottom discharge.   Whatever the type of wagon to be unloaded, the need for any fixed installation or the accurate manoeuvering of the wagon into a pre-set position is avoided.

The need for extendable side guards is to reduce the overall height of the arrangement and thus to facilitate the insertion of the conveyor beneath the wagon to be off-loaded.   The side guards are preferably hinged for this purpose, but as an alternative, they may, for example, be slidable between extended and retracted positions.

The support may be constituted by a trough so that when loaded,  the conveyor belt is forced to assume the configuration of this trough which can be quite shallow since the function of retaining the conveyed material in a lateral direction is performed by the side guards. This combination of conveyor belt and supporting trough bears a general resemblance to that described in British patent specification no: 1,497,945 except for the reduction in the depth of the trough from the semi-circular section shown in one of the examples of this earlier specification. By making the support trough of sufficiently thin section, it may provide a degree of resilience to assist in absorbing the impact of discharged material, but additional shock absorbing arrangements may be included if required. In order to provide adequate capacity, a pair of conveyor belts may run alongside one another, supported by a plate defining respective shallow troughs with a central support bridging the gap between the belts. Alternatively, a single, double-width conveyor belt supported by a trough of corresponding width may be used, thus avoiding any dead area in the centre.

The diameters of the two drums between which the conveyor belt extends determines the minimum height of the arrangement at the two ends. These two drums will lie outside the width of the wagon being off-loaded and it is in the central region immediately above the track that reduced height is important. The supporting frame may therefore conveniently be of reduced height in the central

0122020

region between the two drums, this result being achieved for example by stepping of the frame in the region which may rest upon the rails supporting the wagon and the effect may be enhanced by the inclusion of idler rollers which deflect the lower or return run of the conveyor belt upwardly so that it runs closely below the lower surface of the trough.

Examples of a conveying arrangement in accordance with the invention will now be described in more detail, with reference to the accompanying drawings, in which:-

Figure 1 is an elevation of one form of arrangement with part of the central portion of the conveyor broken away;

Figure 2 is a similar elevation to a reduced scale showing the arrangement in position beneath a railway wagon;

Figure 3 is an end view of the conveyor in the position of Figure 2;

Figure 4 is an elevation of a slightly modified arrangement designed particularly for use when the surface of the railway track is flush with ground level; and

Figure 5 is an end view to an enlarged scale of the arrangement of Figure 4.

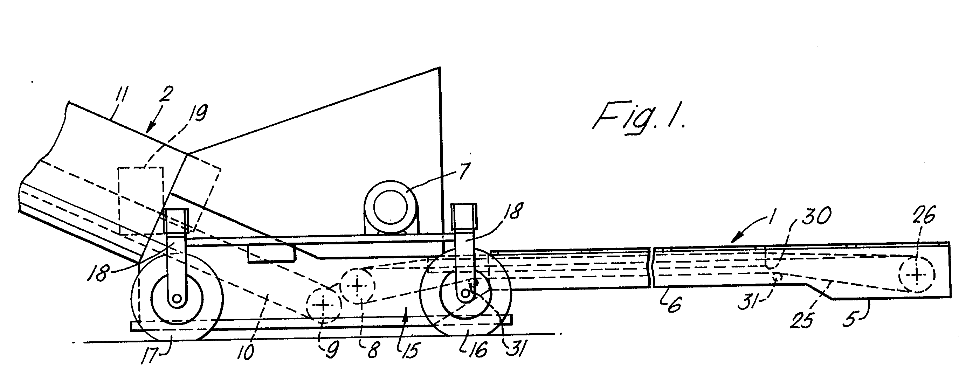

Turning first to Figure 1, a reduced height conveyor in accordance with the invention indicated generally as 1 is shown used in conjunction with a more conventional conveyor, the lower part of which is seen at 2 and which may be in accordance with British patent no: 1,497,945, referred to above. The two conveyors are supported by common side frames 5 which are stepped so as to reduce the height of the assembly in the central region 6 where the height is of primary importance. Details of the drive are not illustrated, but these include a motor 7 connected to a driving drum 8 for the conveyor 1. Conveyor 2 includes a return drum 9 and a belt 10 of which the upper run is enclosed by a tube 11 in the manner described in the earlier patent specification. Only the lower part of this conveyor is illustrated since it can be of any required length.

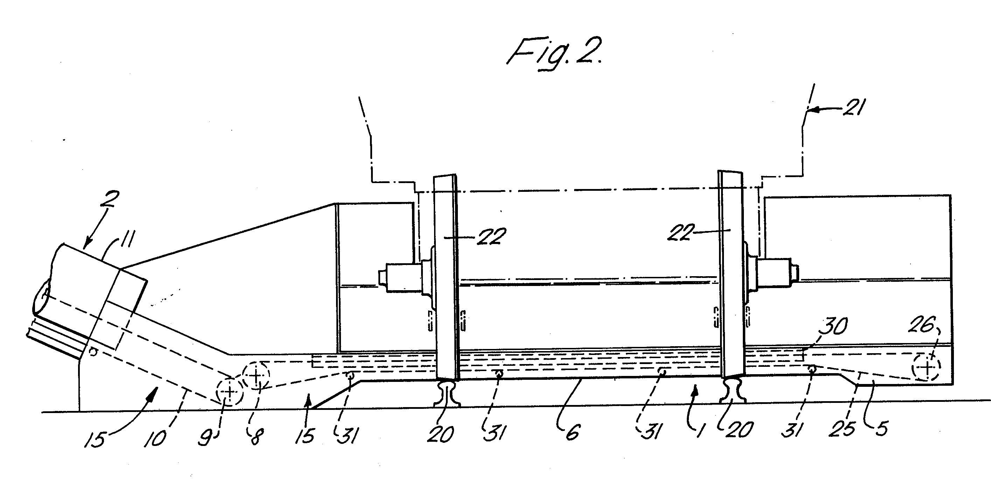

The combination of the two conveyors 1 and 2 is supported by a chassis 15 from which the side frame is cantilevered and which is supported by pairs of wheels 16 and 17, fitted with pneumatic tyres and the latter of which pairs is steerable in order to manoeuvre the equipment into position. Each wheel is supported by an integral jack 18 operated by a hydraulic pump 19 so that the wheels may be raised and lowered as required. The equipment is manoeuvred into position beneath a railway wagon while the wheels 16 and 17 are in the position shown in Figure 1. The wheels are then raised by the jacks 18 so as to lower the chassis 15 and the side frames 5 into the position shown in Figure 2, in which the chassis 15 rests on the ground and the central portion 6 of the side frames 5 rests on rails 20 supporting a wagon to be unloaded, indicated generally as 21 and having wheels 22 resting on the rails 20.

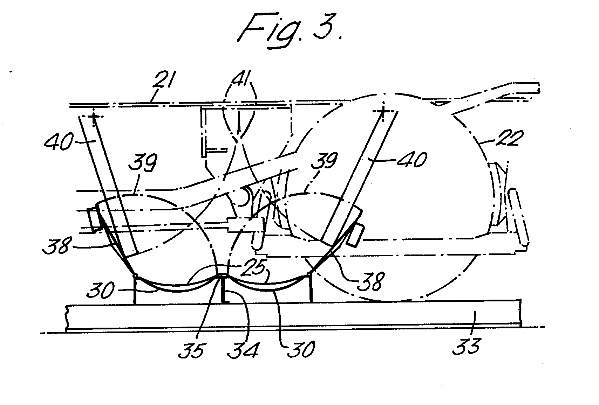

Turning to the details of the conveyor 1 which forms the main subject of the invention, a pair of endless belts 25 are driven by the drum 8 already referred to and pass around a return drum 26 at the free end of the side frames 5. The transporting run of each belt 25 is supported by a relatively shallow trough 30 best seen in Figure 3, and constituting appreciably less than a complete semi-circle. The drums 8 and 26 are under-slung in relation to the troughs 30 so that the upper surface of each drum and hence the upper run of each belt 25 is only slightly above the surface of its respective trough 30, as seen in Figure 3 which shows the belts in an unloaded condition.   The lower run of each belt 25 is supported by idler rollers 31 which are so located as to deflect the lower run of the belt upwardly towards the bottom of the respective trough 30 so as to permit the upward stepping of the side frame 5 in the central region 6.

Each belt 25 is preferably a single-sided rubber belt with a backing of polyester and the troughs 30 are of stainless steel of sufficiently thin section to provide a degree of resilience which avoids the need for separate impact rollers since the material of the troughs themselves is able to yield under the impact of the discharged material.   The width of each belt is significantly smaller than the corresponding dimension of the respective trough and when loaded, the backing of each belt is almost completely in contact with the surface of its trough, but the combination of polyester and steel leads to a very low co-efficient of friction and the resilience of the steel leads to a highly efficient conveying arrangement.

Turning to Figure 3,  the two troughs 30 form part of a unitary structure supported by cross members 33 extending between the side frames 5.

A supporting member 34 is formed with a nose portion 35 which effectively bridges the gap between the two troughs 30 and thus provides a substantially continuous conveying surface. At the outer edges of the assembly of troughs are hinged two side guards 38 which are shown in the extended position in Figure 3, but are capable of being swung inwardly as indicated by the dotted arcs 39 so as to lie substantially horizontally across the tops of the troughs 30. The two side guards 38 are folded inwardly into this position while the conveyor is being manoeuvred into position beneath the wagon 21 and when the conveyor has been lowered onto the rails 20 as previously described, the side guards 38 can then be swung out into the position shown in Figure 3 where they are supported by the structure of the wagon. Various components of the wagon itself, which need not be described in detail, are shown in dotted lines so as to illustrate how small is the gap available for the insertion of the conveyor and to make it clear that the side guards must be folded flat before the conveyor can be manoeuvred into position. Once in position, however, the side guards can be swung outwardly without fouling any of the illustrated components and in this position they co-operate with flaps 40 which form part of the bottom discharge arrangement of the wagon 21. The flaps 40 are normally in the horizontal position where they close the bottom of the wagon, but when the conveyor 1 has been manoeuvred into position, the flaps 40 are swung downwardly as indicated by the dotted turning arcs 41 so as to co-operate with the side guards 38 to define a closed conveying channel.

The opening of the flaps 40 discharges the material onto the conveyor 1 which then transports the material to the left as seen in Figure 1 and then transfers it to the conveyor 2 which then transports it further, as required. Since the conveyor 2 is clear of the wagon, no space restrictions apply and this conveyor may either transfer the material to a further conveyor or directly to another vehicle. Although the conveyor 2 is illustrated as being of the same general type as referred to originally, i.e. including an endless belt running in a tubular member, this is not essential and the conveyor 1 may transfer the material to any conventional type of conveyor which is capable of accepting it at the low level involved.

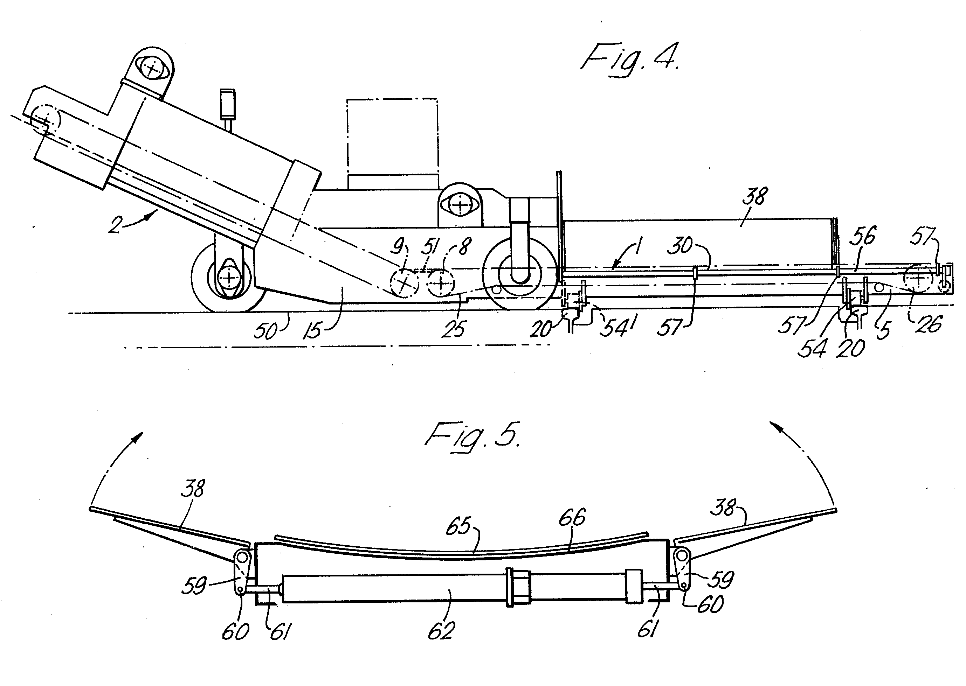

The modifications illustrated in the arrangement of Figure 4 are intended primarily to allow the arrangement to operate when the ground level is flush with the surface of the rails 20, as indicated at 50, which is frequently the case in loading and unloading areas. The effect of this difference of level is that the driving drum 8 at the discharge end of the conveyor 1 is closer to the ground level 50, bringing it to the same level as the return drum 9 of the conveyor 2. This slightly complicates the transfer of material between the conveyors 1 and 2 and necessitates the inclusion of a bridging member 51 between the two conveyors.

A further modification lies in the provision of a pair of small rollers 54 which are mounted on the side frames 5 and engage the rail 20 further from the discharge end of the conveyor 1. As illustrated, these rollers (of which only one is visible) are flanged, but this is not essential and plain rollers which may be slightly wider than the rail 20 may also be used. These rollers support the side frames 5 on the rail 20 and facilitate manoeuvering of the arrangement as a whole in a direction along the rails 20. Corresponding rollers shown in dotted lines as 54' may optionally be provided for engagement with the other of the pair of rails.

The construction of the side guards 38 is illustrated in more detail in this Figure, and more particularly in the end view of Figure 5. Each guide is secured to a corresponding torsion rod 56 capable of turning movement in guides 57 secured to the side frames 5, the rods 56 extending to the right beyond the ends of the guards 38 as seen in Figure 4. At its right hand end, each rod 56 carries a crank arm 59 which is pivotally connected at 60 to an operating rod 61 of a hydraulic ram 62. Application of hydraulic pressure to the ram 62 turns the rods 56 and causes the side guards 38 to move from the retracted position shown in Figure 5 which they assume when the conveyor arrangement is being manoeuvred into position beneath the wagon, and a more nearly upright position in which they perform their function of retaining loose material on the conveyor.

A further modification illustrated in Figure 5 is the use of a single, double-width conveyor belt 65 in place of the twin belts seen in Figure 3. This belt is supported by a shallow trough 66 which, as with the troughs 30, may be sufficiently thin to provide a degree of resilience and avoid the need for separate impact rollers. Again the trough 66 may be of stainless steel, but other materials are also possible. As previously mentioned, however, the combination of a polyester-backed conveyor belt and a steel trough leads to a particularly low co-efficient of friction.

C L A I M S

1. A conveyor arrangement for the off-loading of bottom-discharge hopper wagons comprising an endless conveyor belt extending between a driving drum and a return drum supported by a frame cantilevered from a steerable chassis, and having a support beneath at least the major portion of its upper run and extendable side guards for retaining loose material on the belt.

2. A conveyor arrangement according to claim 1, in which the side guards are hinged.

3. A conveyor arrangement according to claim 1 or claim 2 in which the support is in the form of a trough.

4. A conveyor arrangement according to claim 3 in which the trough is of sufficiently thin section as to provide a degree of resilience to assist in absorbing the impact of discharged material.

5. A conveyor according to any one of the preceding claims in which the supporting frame is of reduced height in the central region between the two drums.

6. A conveyor arrangement according to any one of the preceding claims and including a pair of conveyor belts running alongside one another, supported by a plate defining respective shallow troughs with a central support bridging the gap between the belts.

7. A conveyor arrangement according to any one of the preceding claims in which the chassis has wheels each supported by an integral jack.

0122020

- 13 -

8. A conveyor arrangement according to any one of the preceding claims in which the frame includes rollers for engagement with one or both rails of a railway track to assist in manoeuvering in a direction along the track.

Fig.1.

0122020

0122020

Fig. 2.

Fig. 3.

Fig. 4.

Fig. 5.

0122020

0122020

**European Patent Office**

**EUROPEAN SEARCH REPORT**

| | DOCUMENTS CONSIDERED TO BE RELEVANT | | EP 84301472.1 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | DE - A - 2 303 984 (MÜSCH)<br>* Totality *<br>-- | 1 | B 65 G 67/24<br>B 65 G 41/02 |
| A | DE - B - 1 224 197 (MANNESMANN-MEER AKTIENGESELLSCHAFT)<br>* Column 1; fig. 1,2 *<br>-- | 1 | |
| D,A | GB - A - 1 497 945 (LEREBOURS)<br>* Totality *<br>-- | 1,3,4 | |
| A | GB - A - 1 366 868 (MITCHELL)<br>* Fig. 1,2 *<br>---- | 1 | |

| TECHNICAL FIELDS SEARCHED (Int. Cl. ³) |
|---|
| B 65 G 15/00 |
| B 65 G 21/00 |
| B 65 G 41/00 |
| B 65 G 67/00 |

The present search report has been drawn up for all claims

| Place of search<br>VIENNA | Date of completion of the search<br>19-06-1984 | Examiner<br>PISSENBERGER |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82